**Europäisches Patentamt**

**European Patent Office**

**Office européen des brevets**

(19)

(11) Veröffentlichungsnummer: **0 038 513**
**B1**

# EUROPÄISCHE PATENTSCHRIFT

(12)

(45) Veröffentlichungstag der Patentschrift:
**01.08.84**

(21) Anmeldenummer: **81102852.1**

(22) Anmeldetag: **14.04.81**

(51) Int. Cl.³: **G 03 F 1/00**

---

(54) Verfahren und System zum Abbilden eines Bildes eines Gegenstandes.

---

(30) Priorität: **23.04.80 US 143814**

(43) Veröffentlichungstag der Anmeldung:
**28.10.81 Patentblatt 81/43**

(45) Bekanntmachung des Hinweises auf die Patenterteilung:
**01.08.84 Patentblatt 84/31**

(84) Benannte Vertragsstaaten:
**AT BE CH DE FR GB IT LI NL SE**

(56) Entgegenhaltungen:
**FR - A - 2 344 152**
**US - A - 2 956 115**
**US - A - 3 484 791**

(73) Patentinhaber: **AMERICAN HOECHST CORPORATION,
Route 202-206 North, Somerville, N.J. 08876 (US)**

(72) Erfinder: **Pomeroy, Keith H., 29475 Riviera Court, San
Juan Capistrano, CA 92675 (US)**

(74) Vertreter: **Zounek, Nikolai, Dipl.-Ing. et al, c/o KALLE
Niederlassung der Hoechst AG Patentabteilung
Postfach 3540,
Rheingaustrasse 190 D-6200 Wiesbaden 1 (DE)**

# Beschreibung

Die Erfindung betrifft ein Verfahren zum Abbilden einer von einem Leselaserstrahl abgetasteten Eingabevorlage auf einen Aufzeichnungsträger mittels eines Schreiblaserstrahls, bei dem ein Videosignal bei der Abtastung der Eingabevorlage durch den Leselaserstrahl erzeugt wird, und ein System zum Abbilden einer von einem Leselaserstrahl abgetasteten Eingabevorlage auf einen Aufzeichnungsträger.

Im allgemeinen findet die Erfindung Anwendung in Abbildungssystemen und -verfahren, und insbesondere in einem Lasergraviersystem und in einem Verfahren für ein derartiges System. Die durch einen abtastenden Laserstrahl aufgezeichneten Bilder haben die Tendenz, sich in Richtung des Strahlpfades zu vergrössern. Diese Unmöglichkeit der Bildwiedergabe von einem Umbruch in einem Verhältnis 1:1 bei dem notwendigen Belichtungspegel schafft bedeutende Probleme, wie beispielsweise eine Verschmierung oder fehlenden Kontrast in gerasterten Bildern, die nach herkömmlichen Verfahren wiedergegeben werden und darüber hinaus eine Vergrösserung der Zeichengrösse in wiedergebenen Textbildern. Wegen dieses Anwachsens is es im allgemeinen notwendig, eine relativ hohe Schwellwert-Einstellung anzuwenden, um in den gerasterten Schattenpartien des Bildes die Raster noch offen zu halten. Wird der Schwellwert hoch genug für diesen Zweck eingestellt, so erscheint in den Spitzen- und Bodenteilen von Buchstaben, wie beispielsweise C, O und S eine charakteristische Unterbrechung.

In der Vergangenheit wurden Versuche unternommen, das Problem der Bildvergrösserungen durch Techniken, wie die Verwendung spezieller Verstärker und astigmatischer Optiken, Unterbelichtung des Bildes und Verwendung von Platten mit hoher Gradation und von starken Entwicklern, zu lösen. Durch die Anwendung derartiger Techniken ist es zum Teil möglich, Bilder mit dem gewünschten Vorlage-zu Bildverhältnis 1:1 wiederzugeben. Jedoch sind diese Techniken nicht für die Anwendung in jedem Fall geeignet, sondern vielmehr nur für die Anwendung in Einzelfällen.

Es ist im allgemeinen auch notwendig, Raster mit einer unterschiedlichen Kameraeinstellung zu belichten, wie sie normalerweise verwendet wird, und jede Bildwiedergabe mit einem Raster zeigt ein Anwachsen der Bildzeichen bei positiv belichteten Platten und ein Schrumpfen bei negativ belichteten Filmsystemen.

Aus der FR-A 2 344 152 sind ein Verfahren und ein Gerät zum Steuern der Intensität eines Laserstrahls bekannt, der eine Vorlage rasterförmig abtastet. Das reflektierte Licht wird von einem Fotosensor erfasst, der die Weiss- und Schwarzstellen der Vorlage in elektrische Logiksignale mit Pegeln «1» und «0» umsetzt, die zu einem entfernt angeordneten Sender/Empfänger übertragen werden. Die Steuerung des Bildes des Lasers erfolgt bevorzugt durch ein analoges Eingangssignal, das durch den Sendeteil eines Faksimilegeräts erzeugt wird, wenn der Laserstrahl die Vorlage abtastet.

Bei einer digitalen Steuerung des Ausgangsstrahls des Lasers entsteht eine Schwarz-Weiss-Kopie, da eine logische «0» der Abtastung von grauen oder schwarzen Stellen und eine logische «1» der Abtastung weisser Stellen entspricht. Bei Digitalbetrieb wird das aufgrund der Abtastung der Vorlage erzeugte Videosignal in Digitalimpulse mit vorbestimmter Amplitude umgesetzt.

Bei Analogbetrieb wird das analoge Ausgangssignal des abtastenden Fotodetektors dem Laser eingespeist, so dass die Intensität des Ausgangsstrahls des Lasers über den Betriebsbereich variabel ist. Durch das verwendete analoge Signal für die Steuerung wird die Laserstrahlintensität linear zwischen dem maximalen und dem minimalen Pegel moduliert, so dass der Laserstrahl zur Erzeugung von Grautönungen geeignet ist. Bei der Analogsteuerung wird die Intensität des Laserausgangsstrahls analog gesteuert, jedoch ändert sich nicht dessen Pulsbreite mit dem Pegel des Videosignals.

Bei einer Steuerung durch ein Digitalsignal wird die Laserstrahlintensität nur zwischen den beiden Werten entsprechend dem Minimal- und dem Maximalpetel moduliert.

Die US-A 3 484 791 beschreibt einen mechanischen Schreibstift eines Faksimile-Aufzeichnungsgeräts, an den Hochspannungsdruckimpulse angelegt werden. Ein von dem Schreibstift aufgrund eines zugeführten Impulses auf einem Aufzeichnungspapier erzeugtes latentes elektrostatisches Zeichen ist um einen Wert verbreitert, der proportional zu der effektiven Breite des Schreibstiftes, der Geschwindigkeit des Schreibstiftes relativ zu dem Aufzeichnungspapier und der Dauer des Impulses ist. Dies ist unerwünscht, da dadurch die Breite sämtlicher senkrechter Linien um einen Wert zunehmen würde, der proportional der Schreibstiftbreite und dem Produkt aus Impulsdauer und Geschwindigkeit des Schreibstiftes relativ zu dem Aufzeichnungspapier wäre. Um dies zu verhindern, werden die Impulsbreiten um einen Wert vermindert, der proportional der Breite des Schreibstiftes ist, indem die einlaufenden Impulse im vorderen Teil gekürzt, d.h. um einen Wert geschrumpft werden, welcher der für eine Papierbewegung von der Vorder- zu der Hinterkante des Schreibstiftes erforderlichen Dauer entspricht. Dadurch ist das erzeugte latente elektrostatische Bild eine massstabsgetreue Reproduktion des abgetasteten Zeichens.

Bei dem bekannten Faksimile-Gerät wird beispielsweise auf der Eingabeseite eine Vorlage optisch abgetastet, die empfangenen Lichtsignale in elektrische Steuersignale umgesetzt und über eine Leitung an das Faksimile-Empfangsgerät gesendet, in welchem der eletrostatische Druck entsprechend der eingehenden Druckimpulse gesteuert wird. Es findet somit ein optischer Lesevorgang statt, der in einen mechanischen Druckvorgang umgesetzt wird, jedoch ist nicht vorgesehen, sowohl das Lesen der Vorlage als auch das Drucken bzw. Schreiben der Kopie jeweils mit Hilfe von Lasern vorzunehmen. Bei dem bekannten Gerät handelt es sich nur um einen einfachen Ausgleich der mechanischen Abmessungen des Schreibstiftes, wobei das Problem der Bildverbreiterung deswegen auftritt, weil ein Teil des Bildes geformt wird, während der Schreibstift einerseits stillsteht und andererseits in bezug auf das Aufzeichnungspapier bewegt wird.

Aufgabe der Erfindung ist es, ein Laserabbildungssystem und ein Abbildungsverfahren mit Lasern so zu verbessern, dass die Nachteile herkömmlicher Lasersysteme in bezug auf die Vergrösserung der Bildzeichen in der Abbildung überwunden werden und die Massnahmen zur Verhinderung dieser Vergrösserung der Bildzeichen in der Abbildung kostengünstig in bestehenden Lasersystemen und -verfahren vorgenommen werden können.

Diese Aufgabe wird erfindungsgemäss durch die Verfahrensmassnahmen des Anspruchs 1 gelöst.

Ein erfindungsgemässes System zum Abbilden einer von einem Leselaserstrahl abgetastetem Eingabevorlage auf einen Aufzeichnungsträger mittels eines Schreiblaserstrahls, mit einer dem Leselaser nachgeschalteten Abtastvorrichtung, die den Leselaserstrahl Zeile um Zeile auf der Eingabevorlage rasterförmig ablenkt, mit einer Fiberoptik- und Fotovervielfacheranordnung, die das von der Eingabevorlage reflektierte Licht empfängt und in ein Videosignal entsprechend der von der Eingabevorlage gelesenen Information umwandelt, ist dadurch gekennzeichnet, dass ein Schwellwertdetektor vorgesehen ist, der das Videosignal der Fiberoptik- und Fotovervielfacheranordnung empfängt, auf den Pegel des Videosignals anspricht und ein rechteckförmiges Signal erzeugt, das aus einer Pulsreihe mit Pulsen vorgegebener Höhe und mit dem Pegel des Videosignals sich ändernden Pulsbreiten besteht, dass der Schwellwertdetektor mit Einrichtungen zur Verringerung der Pulsbreite jedes Pulses des rechteckförmigen Signals um einen vorgegebenen Betrag verbunden ist, dass das verkürzte rechteckförmige Ausgangssignal der Einrichtungen über eine Treiberschaltung einem Modulator im Strahlengang des Schreiblaserstrahls zugeführt wird, um diesen nur während der Dauer der verkürzten Pulse von dem Modulator zu einer Abtastvorrichtung zu leiten, die den Schreiblaserstrahl zeilenweise über den Aufzeichnungsträger ablenkt.

Eine Weiterbildung des Systems zeichnet sich dadurch aus, dass die Einrichtungen zur Verringerung der Pulsbreite der Pulse eine Verzögerungsschaltung aufweisen, die auf das rechteckförmige Signal anspricht und ein verzögertes Signal der gleichen Wellenform wie das rechteckförmige Signal liefert, jedoch zeitversetzt um einen Betrag entsprechend dem Betrag, um den die Pulsbreite verringert wird, und ferner eine UND-Torschaltung als Koinzidenz-Schaltung, deren einer Eingang mit dem Ausgang des Schwellwertdetektors und deren anderer Eingang mit dem Ausgang der Verzögerungsschaltung verbunden ist und auf das rechteckförmige Signal und das verzögerte Signal anspricht, um als Ausgangssignal ein verringertes rechteckförmiges Signal zu liefern, das der logischen UND-Funktion des rechteckförmigen Signals und des verzögerten Signals entspricht.

Mit der Erfindung wird der Vorteil erzielt, dass die gleichförmige Verringerung der Pulsbreite das Anwachsen der Bildzeichen im Bereich der Zwischentöne, der etwa bei 30 bis 70% Rasterdichte liegt, eliminiert.

Die Erfindung wird im folgenden anhand eines zeichnerisch dargestellten Ausführungsbeispiel näher erläutert.

(Fortsetzung mit der Figurenkurzbeschreibung auf der ursprünglichen Seite 3, Zeile 20)

Es zeigen:

Fig. 1 ein vereinfachtes Blockschaltbild einer Ausführungsform eines Laserabbildungssystem nach der Erfindung,

Fig. 2 ein Wellenform-Diagramm zur Darstellung der Betriebsweise eines Teils des Systems nach Fig. 1, und

Fig. 3 eine grafische Darstellung des Zusammenhangs zwischen der Punktgrösse bzw. der Lochgrösse auf dem Umbruch und in der Abbildung auf dem Ausgabemedium.

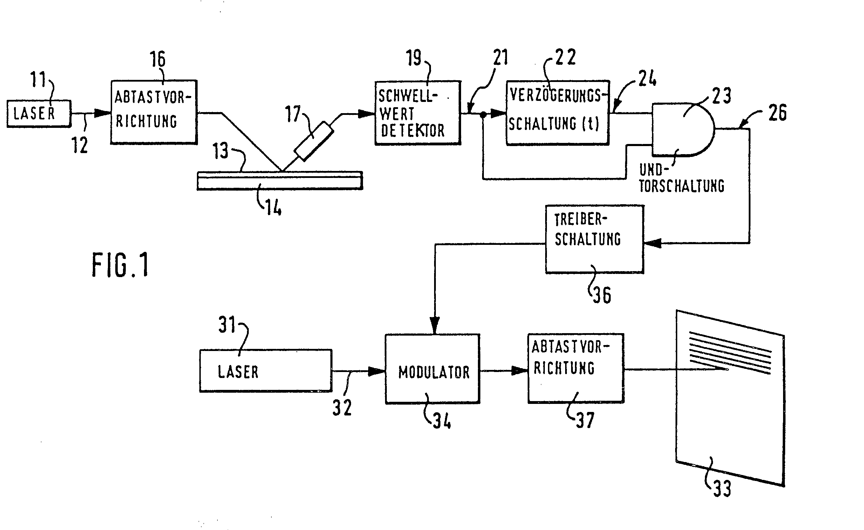

Wie aus Fig. 1 ersichtlich ist, umfasst das Abbildungssystem einen Laser 11, der einen Lesestrahl 12 zum Abtasten eines Umbruchs 13 oder einer sonstigen Eingabekopie auf einem Kopiertisch 14 erzeugt. Eine Abtastvorrichtung 16 lenkt den Lesestrahl 12 so ab, dass er die Eingabekopie Zeile um Zeile rasterförmig abtastet.

Eine Fiberoptik-Anordnung 17 empfängt das von der Kopie reflektierte Licht des Lesestrahls und leitet dieses Licht an eine Fotovervielfacherröhre oder an einen sonstigen Fotovervielfacher weiter, der ein elektrisches Signal erzeugt, das der von der Eingabekopie abgelesenen Information entspricht. Die Fiberoptik-Anordnung 17 umfasst eine Anzahl von optischen Fassersträngen, von denen die einen Enden in einer Reihe zusammengefasst sind, die im wesentlichen parallel zu den Abtastlinien bzw. -zeilen auf der Eingabekopie ausgerichtet ist. Die anderen Enden der Fasserstränge sind so zusammengefasst, dass das Licht der gesamten Breite der Kopie, d.h. einer Zeile der Kopie, der Fotovervielfacherröhre zugeleitet wird, die in Fig. 1 integriert mit der Fiberoptik-Anordnung 17 dargestellt ist.

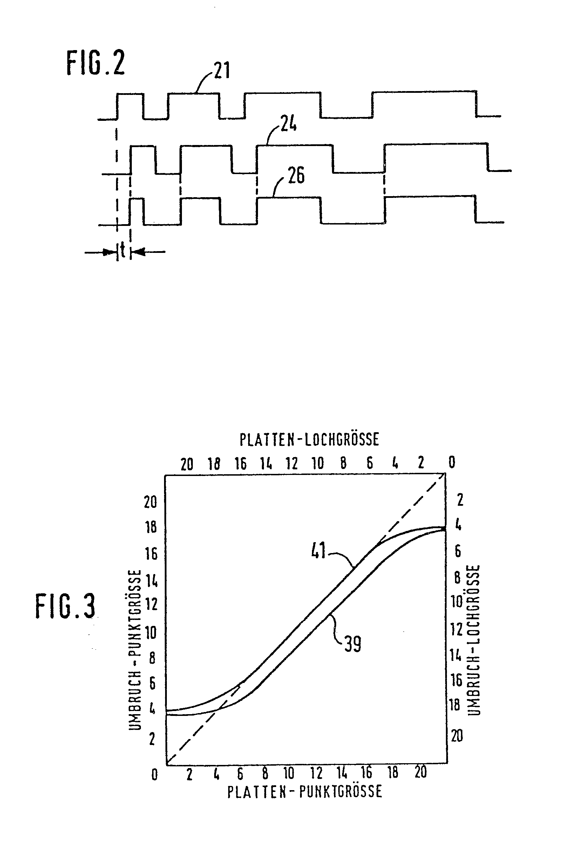

Das durch die Fotovervielfacherröhre erzeugte Videosignal ändert sich im wesentlichen sinusförmig in Übereinstimmung mit der von der Eingabekopie abgetasteten Information. Der Pegel dieses Signals wird durch einen Schwellwertdetektor 19 überwacht, der das sich sinusförmig ändernde Videosignal in ein im wesentlichen rechteckförmiges Signal umwandelt. Das Ausgangssignal 21 des Schwellwertdetektors 19 ist in Fig. 2 dargestellt und umfasst eine Reihe von im wesentlichen rechteckförmigen Pulsen gleicher Höhe und einer Pulsbreite, die sich mit dem Videosignal ändert. Ist das Videosignal grösser als der durch den Schwellwertdetektor 19 eingestellte Pegel, so ist das Ausgangssignal 21 hoch, und ist das Eingangssignal gegenüber dem Schwellwertpegel niedrig, so ist auch das Ausgangssignal 21 niedrig.

Es wurde festgestellt, dass der Betrag der Vergrösserung, die im Bereich der Zwischentöne, z.B. bei einer Rasterdichte zwischen 30–70% eines Laserabtastsystems auftritt, relativ konstant ist. So wächst beispielsweise der Durchmesser von 0,1016 mm (4 mils) eines Punktes auf 0,1397 mm (5.5 mils) an, der Durchmesser eines Punktes von 0,2032 mm (8 mils) auf 0,2413 mm (9.5 mils), der Durchmesser eines Punktes von 0,3810 mm (15 mils) auf 0,4191 mm (16.5 mils) an. Dies bedeutet, dass das mittlere Wachstum im Bereich der Zwischentöne 0,03810 mm (1.5 mils) beträgt. Um diese Vergrösserung zu eliminieren, sind Einrichtungen zur Verringerung der Pulsbreite jedes Pulses um einen festen Betrag in dem rechteckförmigen Ausgangssignal 21 des Schwellwertdetektors 19 vorgesehen. Diese Einrichtungen bestehen aus einer Verzögerungsschaltung 22 und einer UND-Torschaltung 23. Das rechteckförmige Ausgangssignal 21 des Schwellwertdetektors 19 wird dem Eingang der Verzögerungsschaltung 22 und einem der Eingänge der UND-Torschaltung 23 zugeleitet. Der Ausgang der Verzögerungsschaltung 22 ist mit dem zweiten Eingang der UND-Torschaltung 23 verbunden. Die Verzögerungsschaltung 22 ist so ausgelegt, dass sie eine Zeitverzögerung t liefert, entsprechend dem Betrg, um den jeder Puls in seiner Pulsbreite gemäss der in Fig. 2 gezeigten Wellenform 21 verringert werden soll. Wie aus der Wellenform 24 in Fig. 2 ersichtlich ist, die das Ausgangssignal der Verzögerungsschaltung 22 wiedergibt, ist dieses ähnlich zu dem rechteckförmigen Schwellwertdetektorsignal 21, jedoch um die Zeit t verzögert. Das Ausgangssignal der UND-Torschaltung 23 besitzt die in Fig. 2 gezeigte Wellenform 26 und entspricht der logischen UND-Funktion der Wellenformen 21 und 24. Es ist zu ersehen, dass die Wellenform 26 ähnlich der Wellenform 21 ist, wobei ein fester Betrag von der Führungskante bzw. der Anstiegsflanke jedes positiven Pulses in der Wellenform 21 entfernt wurde.

Bei einer bevorzugten Ausführungsform arbeitet die Abtastvorrichtung 16 mit einer Geschwindigkeit von 350 Abtastungen pro Sekunde, und das wirksame Eingabeformat beträgt 53,34 cm (21.000 mils). Mit diesen Parametern werden 0,0254 mm (1 mil) in 136 Nanosekunden abgetastet und eine Verzögerung von 204 Nanosekunden ergibt eine Verminderung um 0,0381 mm (1.5 mils) pro Puls im Ausgabebild.

Das Abbildungssystem umfasst des weiteren einen zweiten Laser 31, der einen Schreibstrahl 32 zum Abtasten eines Ausgabemediums 33, wie beispielsweise einer Druckplatte oder eines Films, liefert. Ein Modulator 34 regelt die Intensität des Schreibstrahls auf dem Ausgabemedium in Übereinstimmung mit dem Ausgangssignal der UND-Torschaltung 23. Dieses Signal wird dem Steuereingang des Modulators durch eine Treiberschaltung 36 zugeleitet. Eine Abtastvorrichtung 37 lenkt den modulierten Schreibstrahl so ab, dass er entlang aufeinanderfolgender Linien oder Zeilen auf dem Ausgabemedium rasterförmig geführt ist. In dem dargestellten System werden die Eingabekopie und das Ausgabemedium gleichzeitig abgetastet und anstelle von getrennten Abtastvorrichtungen für die beiden Strahlen kann auch eine einzelne Abtastvorrichtung für die beiden Strahlen, nämlich den Leseund den Schreibstrahl, eingesetzt werden. In einem Faksimile-System, in welchem das Leseund das Schreibsystem an verschiedenen Orten untergebracht sind und nicht gleichzeitig abtasten, müssen selbstverständlich getrennte Abtastvorrichtungen verwendet werden.

Die Betriebsweise des Systems nach Fig. 1 und das Verfahren der Erfindung werden im folgenden beschrieben.

Wenn die Eingabekopie durch den Lesestrahl abgetastet wird, wird das Videosignal der Fotovervielfacherröhre, die mit der Fiberoptik-Anordnung 17 zusammengefügt ist, in ein rechteckförmiges Pulssignal 21 durch den Schwellwertdetektor 19 umgewandelt. Die Verzögerungsschaltung 22 und die UND-Torschaltung 23 entfernen einen festen Betrag von jedem Puls in der Wellenform 21, wie dies zuvor erläutert wurde und in Fig. 2 dargestellt ist. Um das gewünschte Bild auf einer Druckplatte zu erhalten, lässt der Modulator 34 den Schreibstrahl durch, wenn das Ausgangssignal der UND-Torschaltung 23 hoch ist. Ist das Ausgabemedium ein Film, so wird der Ausgang des Schwellwertdetektors 19 umgekehrt und der Schreibstrahl wird durchgelassen, wenn der Ausgang der UND-Torschaltung 23 hoch ist, um ein negatives Bild zu erhalten. In jedem Fall verhindert die reduzierte Pulsbreite ein unerwünschtes Anwachsen der Bildzeichen in dem Ausgabebild.

In Fig. 3 zeigt eine Kurve 39 die Beziehung zwischen den relativen Grössen der Punkte und Löcher auf der Eingabekopie und auf dem Ausgabemedium ohne Anwendung des erfindungsgemässen Verfahrens und Systems. In diesem Beispiel wird der Schwellwertdetektor auf eine minimale Punktgrösse von 0,1016 mm (4 mils) eingestellt und die Punkte im Bereich von 0,1524 mm (6 mils) bis 0,4064 mm (16 mils) auf dem Eingabebild werden auf dem Ausgabebild ungefähr 0,0381 mm (1.5 mils) grösser wiedergegeben. Umgekehrt erscheint eine Reduktion von ungefähr 0,0381 mm (1.5 mils) für Löcher, die in einem Grössenbereich von 0,1524 mm (6 mils) bis 0,4064 mm (16 mils) auf dem Eingabebild liegen.

Die Kurve 41 in Fig. 3 zeigt die Wirkung der Erfindung bei der Eliminierung des Anwachsens der Punkte und bei der Schrumpfung der Löcher. Wie aus dieser Kurve ersichtlich ist, wird eine 1:1 Beziehung für die Punkte und Löcher erhalten, deren Durchmesser im Bereich von 0,1524 mm (6 mils) bis 0,4064 mm (16 mils) liegen. Es besteht zwar noch eine geringe Tendenz für ein Anwachsen der Punktgrösse um einen geringen Betrag in Richtung quer zu der Abtastlinie, jedoch ist die Reduktion in der Punktgrösse längs der Abtastlinie ausreichend, um den Integrationsflächeneffekt zu ändern und den Kontrast auf das Verhältnis 1:1 zurückzuführen, welches beispielsweise bei einer Belichtung mit einem Kamerasystem erhalten wird. Es ergibt sich auch eine entsprechende Reduktion in der Grösse des Textes in der Wiedergabe und die mit einem Laserabtastsystem erhaltenen Ergebnisse können ohne weiteres den Vergleich mit den Ergebnissen eines Kamerasystems bestehen.

Mit der Erfindung wird u.a. der Vorteil erzielt, dass das Anwachsen der Bildzeichen wirksam eliminiert und die damit verknüpften Probleme bei bekannten Laserabbildungssystemen gelöst werden. Diese Technik zur Verbesserung der Wiedergabe der Zwischentöne kann kostengünstig in bestehenden Laserabbildungssystemen eingeführt werden und erfodert nur den Einbau einer einfachen Verzögerungsschaltung und einer einzigen UND-Torschaltung, wie sie in dem dargestellten Ausführungsbeispiel gezeigt sind.

Obwohl nur eine bestimmte bevorzugte Ausführungsform des verbesserten Laserabbildungssystems im einzelnen beschrieben wurde, ist es für den Fachmann selbstverständlich, dass bei dem Ausführungsbeispiel bestimmte Veränderungen und Modifikationen vorgenommen werden können, ohne dass von dem in den Patentansprüchen offenbarten Erfindungsgedanken abgewichen wird.

**Patentansprüche**

1. Verfahren zum Abbilden einer von einem Leselaserstrahl abgetasteten Eingabevorlage auf einen Aufzeichnungsträger mittels eines Schreiblaserstrahls, bei dem ein Videosignal bei der Abtastung der Eingabevorlage durch den Leselaserstrahl erzeugt wird, dadurch gekennzeichnet, dass der Pegel des Videosignals sich entsprechend der Tönung der Eingabevorlage verändert, dass das Videosignal durch eine Schwellwertüberwachung zu einem rechteckförmigen Signal digitalisiert wird, das eine Reihe von Pulsen vorgegebener Höhe und einer Pulsbreite umfasst, die sich mit dem Pegel des Videosignals ändert, dass die Pulsbreite jedes Pulses um einen vorgegebenen Betrag am Anfang des Pulses verringert wird, und dass die Pulse verringerter Breite den aus dem Schreiblaser ausgetretenen Schreiblaserstrahl so modulieren, dass er während des Auftretens der Pulse verringerter Dauer auf den Aufzeichnungsträger auftrifft, um diesen zu belichten und in der übrigen Zeit den Aufzeichnungsträger nicht belichtet.

2. System zum Abbilden einer von einem Leselaserstrahl abgetasteten Eingabevorlage auf einen Aufzeichnungsträger mittels eines Schreiblaserstrahls, mit einer dem Leselaser nachgeschalteten Abtastvorrichtung, die den Leselaserstrahl Zeile um Zeile auf der Eingabevorlage rasterförmig ablenkt, mit einer Fiberoptik- und Fotovervielfacheranordnung, die das von der Eingabevorlage reflektierte Licht empfängt und in ein Videosignal entsprechend der von der Eingabevorlage gelesenen Information umwandelt, dadurch gekennzeichnet, dass ein Schwellwertdetektor (19) vorgesehen ist, der das Videosignal der Fiberoptik- und Fotovervielfacheranordnung (17) empfängt, auf den Pegel des Videosignals anspricht und ein rechteckförmiges Signal (21) erzeugt, das aus einer Pulsreihe mit Pulsen vorgegebener Höhe und mit dem Pegel des Videosignals sich ändernden Pulsbreiten besteht, dass der Schwellwertdetektor (19) mit Einrichtungen (22, 23) zur Verringerung der Pulsbreite jedes Pulses des rechteckförmigen Signals (21) um einen vorgegebenen Betrag (t) verbunden ist, dass das verkürzte rechteckförmige Ausgangssignal (26) der Einrichtungen (22, 23) über eine Treiberschaltung (36) einem Modulator (34) im Strahlengang des Schreiblaserstrahls (32) zugeführt wird, um diesen nur während der Dauer der verkürzten Pulse von dem Modulator (34) zu einer Abtastvorrichtung (37) zu leiten, die den Schreiblaserstrahl (37) zeilenweise über den Aufzeichnungsträger (33) ablenkt.

3. System nach Anspruch 2, dadurch gekennzeichnet, dass die Einrichtungen zur Verringerung der Pulsbreite der Pulse eine Verzögerungsschaltung (22) aufweisen, die auf das rechteckförmige Signal (21) anspricht und ein verzögertes Signal (24) der gleichen Wellenform wie das rechteckförmige Signal (21) liefert, jedoch zeitversetzt um einen Betrag entsprechend dem Betrag (t), um den die Pulsbreite verringert wird, und ferner eine UND-Torschaltung (23) als Koinzidenz-Schaltung, deren einer Eingang mit dem Ausgang des Schwellwertdetektors (19) und deren anderer Eingang mit dem Ausgang der Verzögerungsschaltung (22) verbunden ist und auf das rechteckförmige Signal (21) und das verzögerte Signal (24) anspricht, um als Ausgangssignal ein verringertes rechteckförmiges Signal (26) zu liefern, das der logischen UND-Funktion des rechteckförmigen Signals (21) und des verzögerten Signals (24) entspricht.

**Revendications**

1. Procédé de formation d'une image d'un document original d'entrée balayé par un faisceau laser de lecture, sur un support d'enregistrement au moyen d'un faisceau laser d'écriture, selon lequel un signal d'images est produit pendant le balayage du document original d'entrée par le faisceau laser de lecture, caractérisé en ce que le niveau du signal d'images varie en fonction de la tonalité du document original d'entrée, en ce que le signal d'images est numérisé en un signal rectangulaire en le soumettant à un contrôle de seuil, ledit signal rectangulaire consistant en une série d'impulsions d'une amplitude prédéterminée et d'une durée qui varie avec le niveau du signal d'images, en ce que la durée de chaque impulsion est réduite d'une valeur fixe prédéterminée sur le flanc avant de l'impulsion, et en ce que les impulsions de durée réduite modulent le faisceau laser d'écriture provenant du laser d'écriture, de manière que le faisceau laser d'écriture soit projeté sur le support d'enregistrement pendant l'apparition d'impulsions de durée réduite pour exposer le support d'enregistrement tandis qu'aux autres moments, il n'expose pas le support d'enregistrement.

2. Système de formation d'une image d'un document original d'entrée balayé par un faisceau laser de lecture, sur un support d'enregistrement au moyen d'un faisceau laser d'écriture, comprenant un dispositif de balayage suivant le laser de lecture, ce dispositif faisant dévier le faisceau laser de lecture ligne par ligne sur le document original d'entrée en forme d'une trame, un dispositif photo-multiplicateur et à fibres optiques qui reçoit la lumière réfléchie par le document original d'entrée et la convertit en un signal d'images en fonction des informations lues sur le document original d'entrée, caractérisé en ce qu'il comporte un détecteur de seuil (19) qui reçoit le signal d'images du dispositif (17) à fibres optiques et photo-multiplicateur, qui réagit au niveau du signal d'images et qui produit un signal rectangulaire (21) consistant en une série d'impulsions d'amplitude prédéterminées et de durées qui varient en fonction du niveau du signal d'images, en ce que le détecteur de seuil (19) est connecté à des dispositifs (22, 23) destinés à réduire la durée de chaque impulsion du signal rectangulaire (21) d'une valeur fixe prédéterminée (t), en ce que le signal de sortie rectangulaire diminué(26) produit par les dispositifs (22, 23) est appliqué par un circuit d'attaque (36) à un modulateur (34) situé dans le trajet du faisceau laser d'écriture (32) de manière à conduire le faisceau laser seulement pendant la durée des impulsions réduites par le modulateur (34) vers un dispositif de balayage (37) qui dévie le faisceau laser d'écriture (37) ligne par ligne sur le support d'enregistrement (33).

3. Système selon la revendication 2, caractérisé en ce que les dispositifs qui réduisent la durée des impulsions comprennent un circuit à retard (22) qui réagit au signal rectangulaire (21) et qui produit un signal retardé (24) ayant la même forme d'ondes que le signal rectangulaire, mais décalé dans le temps d'une valeur correspondant à la valeur (t) dont la durée des impulsions est réduite, et en ce qu'il comporte en outre une porte ET (23) comme circuit à coïncidence, dont une entrée est connectée à la sortie du détecteur de seuil (19) et dont l'autre entrée est connectée à la sortie du circuit à retard (22) et qui réagit au signal rectangulaire (21) et au signal retardé (24) en produisant un signal rectangulaire réduit (26) comme signal de sortie, correspondant à la fonction logique ET du signal rectangulaire (21) et du signal retardé (24).

**Claims**

1. A method for forming an image of an input original copy, scanned with a read laser beam, on a recording carrier, by means of a write laser beam, in which method a video signal is created during the scanning of the input original copy by means of the read laser beam, characterised in that the level of the video signal is varied in accordance with the tone of the input original copy, in that the video signal is digitalised to a rectangular signal by subjecting the video signal to threshold monitoring, said rectangular signal comprising a series of pulses of predetermined height and a width which varies with the level of the video signal, in that the pulse width of each pulse is decreased by a predetermined fixed amount at the leading edge of the pulse, and in that the pulses of decreased width modulate the write laser beam emerging from the write laser, in such a manner that the write laser beam impinges upon the recording carrier during the occurrence of pulses of decreased width, so as to expose the recording carrier, whereas in the remaining time it does not expose the recording carrier.

2. A system for forming an image of an input original copy, scanned with a read laser beam, on a recording carrier, by means of a write laser beam, comprising a scanning device following the read laser, which device deflects the read laser beam line-by-line across the input original copy in raster fashion; a fiber-optic and photomultiplier arrangement, which receives the light reflected by the input original copy and transforms it into a video signal in accordance with the information read from the input original copy, characterised in that there is provided a threshold detector (19) which receives the video signal of the fiber-optic and photomultiplier arrangement (17), responses to the level of the video signal and produces a rectangular signal (21) which comprises a series of pulses of predetermined height and pulse widths varying in accordance with the level of the video signal, in that the threshold detector (19) is connected to devices (22, 23) for reducing the pulse width of each pulse of the rectangular signal (21) by a predetermined fixed amount (t), in that the decreased rectangular output signal (26) provided by the devices (22, 23) is applied via a driver circuit (36), to a modulator (34), located in the beam path of the write laser beam (32), in order to conduct the laser beam – only during the duration of the decreased pulses – from the modulator (34) to a scanning device (37) which deflects the write laser beam (37) line-by-line across the recording carrier (33).

3. A system as claimed in claim 2, characterised in that the devices for decreasing the width of the pulses comprise a delay circuit (22) which responds to the rectangular signal (21) and provides a delayed signal (24) which has the same wave form as the rectangular signal, but is displaced in time by an amount corresponding to the amount (t) by which the pulse width is reduced and in that there is furthermore provided an AND-gate circuit (23) as a coincidence circuit, one input of which is connected to the output of the treshold detector (19), and the other input of which is connected to the output of the delay circuit (22) and responds to the rectangular signal (21) and the delayed signal (24), in order to provide a decreased rectangular signal (26) as an output signal, corresponding to the logical AND-function of the rectangular signal (21) and the delayed signal (24).

FIG.1

LASER 11 — 12 → ABTASTVOR-RICHTUNG 16 → 13, 14, 17 → SCHWELL-WERT DETEKTOR 19 → 21 → VERZÖGERUNGS-SCHALTUNG (t) 22 — 24 → UND-TORSCHALTUNG 23 — 26

TREIBER-SCHALTUNG 36

LASER 31 — 32 → MODULATOR 34 → ABTASTVOR-RICHTUNG 37 → 33

## FIG.2

## FIG.3

PLATTEN-LOCHGRÖSSE